# EUROPÄISCHE PATENTSCHRIFT

(11) **EP 0 828 620 B1**
(45) Veröffentlichungstag und Bekanntmachung des Hinweises auf die Patenterteilung: **02.12.1998**
(21) Anmeldenummer: 96917436.6
(22) Anmeldetag: 26.05.1996
(51) Int. Cl.: B60C 23/04

(54) **EINRICHTUNG AN FAHRZEUGEN ZUM ÜBERWACHEN DES LUFTDRUCKS IN DESSEN REIFEN**
DEVICE FITTED TO VEHICLES FOR MONITORING TYRE PRESSURE
DISPOSITIF MONTE SUR DES VEHICULES POUR CONTROLER LA PRESSION DES PNEUS

(30) Priorität: 26.05.1995 DE 19518805
(43) Veröffentlichungstag der Anmeldung: 18.03.1998
(73) Patentinhaber: DODUCO GmbH, 75181 Pforzheim (DE)
(72) Erfinder: UHL, Günther, D-74921 Helmstadt-Bargen (DE); NORMANN, Norbert, D-75223 Niefern-Öschelbronn (DE); SCHULZE, Gunter, Lothar, D-75228 Ispringen (DE); KESSLER, Ralf, D-76327 Pfinztal (DE)
(74) Vertreter: Twelmeier, Ulrich, Dipl. Phys.
(86) Internationale Anmeldenummer: EP9602263
(87) Internationale Veröffentlichungsnummer: WO9637373

(56) Entgegenhaltungen:
- EP-A- 0 695 652
- WO-A-94/06640
- DE-C- 4 108 337
- GB-A- 1 294 967
- US-A- 2 860 321
- US-A- 3 872 424

## Beschreibung

Die Erfindung geht aus von einer Einrichtung an Fahrzeugen zum Überwachen des Luftdrucks in dessen Reifen mit den im Oberbegriff des Anspruchs 1 angegebenen Merkmalen. Eine solche Einrichtung ist aus der DE 41 33 993 C2 bekannt. Die bekannte Einrichtung hat einen Druckmeßfühler und einen Sender, welche in die Ventilkappe des jeweiligen Rades integriert sind. Der Empfänger ist vorzugsweise eine tragbare Fernbedienung, mit welcher man zum jeweiligen Rad geht und die in der Ventilkappe befindliche elektronische Schaltung aktiviert, um eine Fernabfrage des gemessenen Reifendrucks durchzuführen. In diesem Fall kann der Reifendruck nur von Zeit zu Zeit bei stehendem Fahrzeug überwacht werden, nicht aber während der Fahrt. Die DE 41 33 993 C2 offenbart aber auch bereits die Möglichkeit, Sende- und Empfangseinrichtungen nicht in einer tragbaren Fernbedienungseinheit, sondern benachbart zum Rad am Chassis des Fahrzeuges sowie Anzeigeeinrichtungen am Armaturenbrett vorzusehen. In jedem Fall werden von dem am Rad vorgesehenen Sender Signale, welche den vom Druckmeßfühler ermittelten Luftdruck beinhalten, drahtlos an eine Auswerte- und Anzeigeeinrichtung übertragen.

Eine ähnliche Einrichtung ist aus der DE 41 33 999 bekannt; dabei sind der Druckmeßfühler und der Sensor aber nicht in einer Ventilkappe, sondern am Ventilfuß angeordnet.

In der Nachbarschaft eines jeden Rades eine Sende- und Empfangseinrichtung anzuordnen, um den Luftdruck im Reifen abzufragen, ist aufwendig.

Aus der WO-A-94/06640 ist es bekannt, den mit je einem Sender ausgerüsteten Rädern eine einzige, gemeinsame Antenne an zentraler Stelle des Automobils zuzuordnen. Bei einer solchen Anordnung muß besonders darauf geachtet werden, daß die Empfansantenne die Signale von allen Rädern trotz minimaler Sendeleistung gut empfangen kann und es bedarf besonderer Maßnahmen, um erkennen zu können, von welchem Rad ein empfangenes Signal stammt.

Der vorliegenden Erfindung liegt die Aufgabe zugrunde, einen Weg aufzuzeigen, wie der Aufbau und die Installation einer Einrichtung zum Überwachen des Reifendrucks bei Fahrzeugen vereinfacht und verbilligt werden können.

Diese Aufgabe wird gelöst durch eine Einrichtung mit den im Anspruch 1, 2 oder 5 angegebenen Merkmalen. Vorteilhafte Weiterbildungen der Erfindung sind Gegenstand der abhängigen Ansprüche.

Jedem Rad ist eine Antenne zugeordnet, welche mit einer elektronischen Empfangs- und Auswerteschaltung verbunden ist. Erfindungsgemäß wird als Antenne nicht eine gesonderte elektrische Leitung verlegt, sondern eine elektrische Leitung genutzt, die einer demselben Rad zugeordneten weiteren Überwachungseinrichtung angehört, insbesondere einer den Bremsbelagverschleiß am jeweiligen Rad überwachenden Einrichtung oder einem ABS-System oder einer Regeleinrichtung, welche bei angetriebenen Rädern das Auftreten von Schlupf verhindert. Das reduziert den Schaltungsaufwand, die Störanfälligkeit, und reduziert schließlich den Installations- und Verkabelungsaufwand, weil eine elektrische Leitung, die in den Bereich eines jeden zu überwachenden Rades geführt wird, mehrfach genutzt wird. Letzteres ist besonders wichtig, weil mit der in den letzten Jahren stark angestiegenen Zahl von Funktionen, die im Fahrzeug auf elektrischem Wege überwacht, gesteuert und betätigt werden, der Verkabelungsaufwand so stark zugenommen hat, daß bereits große Schwierigkeiten bestehen, die immer dicker werdenden Kabelbäume in den Hohlräumen der Karosserie unterzubringen. Durch die vorgesehene Mehrfachnutzung einer elektrischen Leitung steigt der Verkabelungsaufwand für die Signalübertragung vom Sender zur Empfangs- und Auswerteschaltung nicht, obwohl jedem Rad eine eigene Antenne zugeordnet wird.

Die Leitung muß natürlich als Antenne für den vorgesehenen Frequenzbereich geeignet sein. Für die Signalübertragung kommen Frequenzen im Bereich von einigen hundert MHz, insbesondere 433 MHz, in Frage. Da für ABS und ASR Frequenzen von maximal einigen kHz üblich sind und auch die Verschleißanzeige für den Bremsbelag niederfrequent oder mit Gleichstrom erfolgt, lassen sich die hochfrequenten Signale für die Reifendrucküberwachung und die niederfrequenten Signale für die übrige Überwachung problemlos auf einer gemeinsamen Leitung übertragen und wieder trennen.

Vorzugsweise setzt man als elektrische Leitung ein koaxiales Kabel ein, welches in der Nachbarschaft des jeweiligen Rades auf einem Teil seiner Länge von seinem Außenleiter befreit ist, insbesondere auf einer Länge, die einer Viertelwellenlänge des zu übertragenden Reifendrucksignals entspricht - bei einer Frequenz von 433 MHz sind dies 17 cm.

Eine andere Möglichkeit besteht darin, die Sensoren, die im ABS-System, in der ASR-Regelung oder zur Verschleißanzeige bei Bremsbelägen benutzt werden, so zu modifizieren, daß sie als Antenne für die Reifendrucküberwachung tauglich werden. Auch in diesem Fall werden die Zuleitungen zu der weiteren Überwachungseinrichtung durch die Mitbenutzung für die Reifendrucküberwachung doppelt ausgenutzt.

Besonders günstig ist es in jedem der genannten Fälle, nicht für jedes Rad eine eigene Empfangsschaltung vorzusehen, sondern an zentraler Stelle im Chassis eine gemeinsame Empfangs- und Auswerteschaltung vorzusehen. Dadurch können der Schaltungsaufwand, die Störanfälligkeitl und die Kosten ein weiteres Mal gesenkt werden

Es können aber auch andere als zu einer Überwachungseinrichtung führende Leitungen als Antennenkabel genutzt werden, wenn sie hinreichend nahe am jeweiligen Rad verlegt sind, z. B. Leitungen, die eine Leuchte oder einen anderen elektrischen Verbraucher mit Strom versorgen..

Ausführungsbeispiele der Erfindung sind in den beigefügten Zeichnungen dargestellt und werden nachfolgend beschrieben.
- Figur 1: zeigt schematisch die Anordnung einer Einrichtung zur Reifendrucküberwachung in einem Fahrzeug,
- Figur 2: zeigt ein Blockschaltbild eines Schaltungsteils zur Trennung von hochfrequenten und niederfrequenten Signalanteilen,
- Figur 3: zeigt als Blockschaltbild eine Ausführungsform einer Empfangs- und Auswerteschaltung mit mehreren Empfängern,
- Figur 4: zeigt als Blockschaltbild eine Ausführungsform einer Empfangs- und Auswerteschaltung mit nur einem Empfänger, und
- Figur 5: zeigt als Blockschaltbild eine weitere Ausführungsform einer Empfangs- und Auswerteschaltung mit nur einem Empfänger.

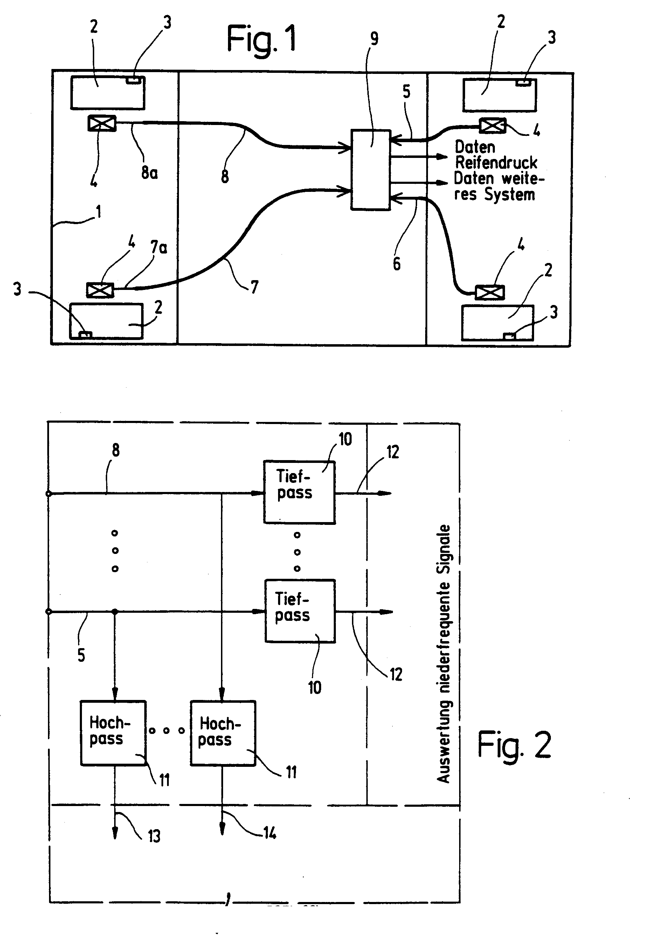

Figur 1 zeigt schematisch im Grundriß das Chassis 1 eines Fahrzeugs mit vier Rädern 2, von denen jedes mit einer aus einem Druckmeßfühler und einem Sensor bestehenden Anordnung 3 ausgerüstet ist. Jedem Rad 2 ist ein Sensor 4 zugeordnet, welcher sich in der Nachbarschaft des Rades 2 befindet. Bei dem Sensor 4 kann es sich um einen Sensor handeln, der im Rahmen eines ABS-Systems oder eines ASR-Systems die Raddrehung überwacht, oder um einen Sensor, der den Verschleiß des Bremsbelages einer dem Rad 2 zugehörigen Scheibenbremse überwacht.

Von den Sensoren 4 führen elektrische Leitungen 5, 6, 7 und 8 zu einer Trennschaltung 9, welche in Figur 2 dargestellt ist.

Die Leitungen 5 bis 8 sind zur Übertragung von Hochfrequenzsignalen geeignet; insbesondere sind es koaxiale Kabel. Sie übertragen nicht nur die von den Sensoren 4 erzeugten ABS-, ASR- oder Bremsbelagverschleißsignale, sondern auch Signale, welche von den Anordnungen 3 drahtlos übermittelt werden. Zu diesem Zweck sind entweder die Sensoren 4 so abgewandelt, daß sie gleichzeitig als HF-Antennen dienen, oder es sind die Leitungen 5 bis 8 so ausgebildet, daß sie als HF-Antennen tauglich sind. Letzteres ist beispielhaft dargestellt anhand der Leitungen 7 und 8, welche zu diesem Zweck an ihren Enden, die mit dem jeweiligen Sensor 4 verbunden sind, in der Nachbarschaft des Rades 2 auf einem Teil 7a, 8a ihrer Länge von ihrem metallischen Außenleiter, der sonst den Innenleiter des koaxialen Kabels abschirmt, befreit sind, vorzugsweise auf einer Länge, die einer Viertelwellenlänge der Sendefrequenz der Anordnung 3 entspricht. Die von den Anordnungen 3 übertragenen Signale, die auf diese Weise empfangen werden können, werden in der Trennschaltung 9 durch Tiefpaßfilter 10 und Hochpaßfilter 11 von den niederfrequenten Signalen der Sensoren 4 getrennt. Die niederfrequenten Signale werden über Leitungen 12 einer bekannten Auswerteschaltung zugeführt, die nicht Gegenstand der vorliegenden Erfindung ist.

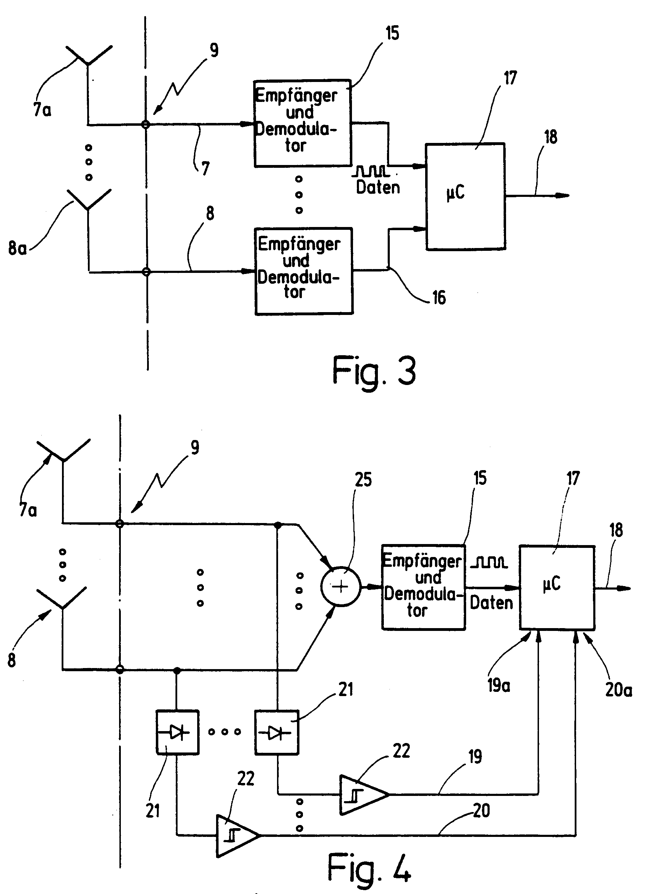

Die hochfrequenten Signale werden über getrennte Leitungen 13, 14 einer dafür geeigneten Empfangs- und Auswerteschaltung zugeführt. Dafür geeignete Schaltungen sind in den Figuren 3 bis 5 dargestellt.

Bei der in Figur 3 dargestellten Schaltungsanordnung werden die vom Sender am Rad 2 ausgesandten, die Information über den Luftdruck im Reifen enthaltenden Signale von Antennen 7a, 8a, bei denen es sich um die vom Außenleiter befreiten Abschnitte der koaxialen Leitungen 7 und 8 handeln kann, aufgefangen, über die koaxialen Leitungen 7 und 8, über die Trennschaltung 9, in Figur 3 lediglich als Schnittstelle dargestellt, zu Empfängern 15 und 16 mit Demodulator übertragen. Jeder Empfangsantenne (jedem Rad) ist an zentraler Stelle im Chassis ein eigener Empfänger 15 bzw. 16 mit Demodulator zugeordnet, so daß die demodulierten Empfangsdaten von jedem Rad 2 parallel zur Verfügung stehen und auch parallel ausgewertet werden können. Dafür ist ein Mikrocomputer 17 vorgesehen, welchem die demodulierten Signale zugeführt werden. Am Ausgang 18 liefert der Mikrocomputer 17 Signale, die eine Anzeigeeinrichtung, z.B. ein LCD-Display oder eine Warnleuchte, steuern.

Die in Figur 4 dargestellte Schaltungsanordnung zeichnet sich gegenüber der in Figur 3 dargestellten Schaltungsanordnung durch einen geringeren Schaltungsaufwand aus, sie hat nämlich nicht für jedes Rad 2 eine eigene Empfangsstufe, sondern für alle überwachten Räder 2 einen gemeinsamen Empfänger 15 und Demodulator. Die Empfangssignale aller Antennen 7a, 8a werden in einer Summierstufe 25 summiert und dem einzigen Empfänger 15 und Demodulator eingegeben, der aus dem von den Rädern gesendeten Datentelegramm ein Binärsignal bildet und dem als Auswerteschaltung vorgesehenen Mikrocomputer 17 eingibt.

Wie im Stand der Technik beschrieben, arbeiten die Anordnungen 3 aus Druckmeßfühler und Sender nicht permanent, sondern werden zur Schonung der sie betreibenden Batterie nur in Zeitabständen aktiviert und senden dann ein Datentelegramm an den Empfänger 15. Da die an den Rädern 2 vorgesehenen Sender nicht aufeinander sychronisiert sind, ist es möglich, daß Datentelegramme von verschiedenen Rädern einander überlappen. Um dennoch eine eindeutige Reifendrucküberwachung durchführen zu können, ist ergänzend vorgesehen, für jedes Signal, welches dem Empfänger 15 zugeleitet wird, eine Feldstärkeauswertung durchzuführen. Zu diesem Zweck führt von den Zuleitungen 7, 8 jeweils eine Zweigleitung 19, 20 unter Umgehung des Empfängers 15 zum Mikrocomputer 17. In jeder dieser Zweigleitungen 19, 20 liegen hintereinander ein Gleichrichter 21 und ein Grenzwertschalter 22. Der Gleichrichter 21 bewirkt eine Gleichrichtung des abgezweigten Signalanteils. Bei ausreichender Feldstärke des Signals kann der gleichgerichtete Anteil den Grenzwertschalter 22 passieren und gelangt auf einen Eingang 19a bzw. 20a des Mikrocomputers, der daraufhin HIGH gesetzt wird. Auf diese Weise kann der Mikrocomputer 17 das ihm vom Empfänger 15 übermittelte Signal einem bestimmten Rad 2 zuordnen. Werden gleichzeitig bzw. einander überlappend von mehreren Rädern Daten empfangen, dann werden dementsprechend mehrere Eingänge 19a, 20a des Mikrocomputers HIGH gesetzt. In diesem Fall werden die vom Empfänger 15 an den Mikrocomputer 17 übermittelten Daten nicht ausgewertet.

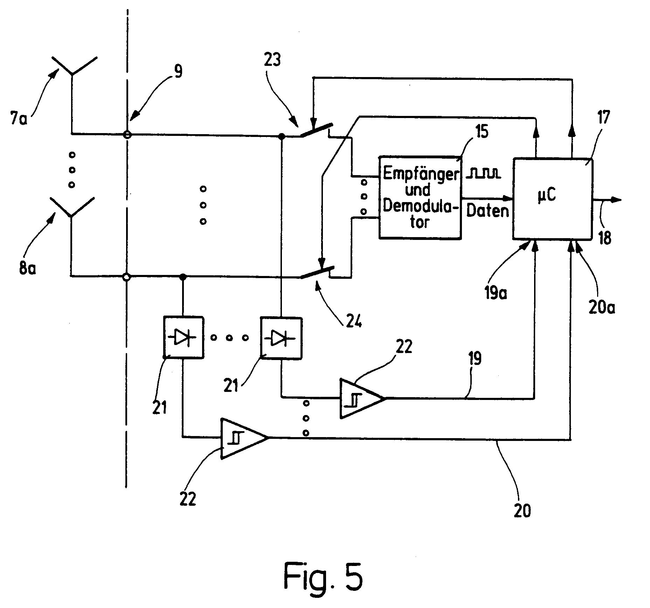

Die in Figur 5 dargestellte Ausführungsform unterscheidet sich von der in Figur 3 dargestellten Ausführungsform dahingehend, daß dem Empfänger 15 für jedes Rad ein vom Mikrocomputer 17 steuerbarer Schalter 23, 24 vorangestellt ist. Die Schalter 23, 24 ersetzen die Summierstufe 25 in Figur 4. Die von den Antennen 7a, 8a kommenden Signale werden über die Schalter 23, 24 zum Empfänger 15 mit Demodulator durchgeschaltet. Die Feldstärkeauswertung erfolgt wie im Ausführungsbeispiel gemäß Figur 4. Erst wenn ein von einer der Leitungen 7, 8 abgezweigtes und gleichgerichtetes Signal einen der Eingänge 19a, 20a des Mikrocomputers HIGH gesetzt hat, wird der in der zugehörigen Leitung 7, 8 liegende Schalter 23, 24 geschlossen und das von der Antenne 7a, 8a kommende Signal auf den Empfänger 15 durchgeschaltet. Ein weiteres, zeitlich überlappend eintreffendes Signal von einer anderen Antenne wird vom Mikrocomputer 17 nicht auf den Empfänger 15 durchgeschaltet und stört die Auswertung des zuerst eingetroffenen Sigales nicht. Bei sich überlappenden, von den Rädern gesendeten Datentelegrammen wird das zuerst empfangene ausgewertet. Es ist aber auch möglich, mit einer Prioritätenliste zu arbeiten: Das heißt z.B., daß dann, wenn bei überlappend empfangenen Datentelegrammen das als zweites ankommende von einem Rad mit höherer Priorität kommt, die Auswertung des ersten Datentelegramms abgebrochen und auf das zweite umgeschaltet wird. Eine weitere Möglichkeit besteht darin, die den Rädern zugeordneten Antennen 7a, 8a vom Mikrocomputer 17 zyklisch abfragen zu lassen. In diesem Fall kann auf eine Feldstärkeauswertung verzichtet werden.

## Patentansprüche

1. Einrichtung an Fahrzeugen, welche Räder mit Luftreifen haben, zum Überwachen des Luftdrucks in den Reifen
mit einem Druckmeßfühler an jedem der zu überwachenden Räder (2),
mit einem beim jeweiligen Druckmeßfühler angeordneten Sender, welcher Signale, die den vom Druckmeßfühler ermittelten Luftdruck beinhalten, aussendet,
mit Antennen (7a, 8a) zum Empfangen dieser Signale, welche dem jeweiligen Rad (2) benachbart am Chassis des Fahrzeugs angebracht sind,
**dadurch gekennzeichnet,** daß jede Antenne (7a, 8a) eine eigene elektrische Leitung (7, 8) nutzt, die einer demselben Rad (2) zugeordneten weiteren Überwachungseinrichtung (4) angehört.

2. Einrichtung an Fahrzeugen, welche Räder mit Luftreifen haben, zum Überwachen des Luftdrucks in den Reifen
mit einem Druckmeßfühler an jedem der zu überwachenden Räder (2), mit einem beim jeweiligen Druckmeßfühler angeordneten Sender, welcher Signale, die den vom Durckmeßfühler ermittelten Luftdruck beinhalten, aussendet,
mit Antennen (7a, 8a) zum Empfangen dieser Signale, welche dem jeweiligen Rad (2) benachbart am Chassis des Fahrzeuges angebracht sind,
**dadurch gekennzeichnet**, daß jede Antenne einen ihr zugewandten Sensor (4) nutzt, der einer demselben Rad (2) zugeordneten weiteren Überwachungseinrichtung angehört.

3. Einrichtung nach Anspruch 1 oder 2, **dadurch gekennzeichnet,** daß die weitere Überwachungseinrichtung (4) den Bremsbelagverschleiß überwacht.

4. Einrichtung nach Anspruch 1 oder 2, **dadurch gekennzeichnet,** daß die weitere Überwachungseinrichtung (4) die Räder (2) auf Blockieren (ABS-System) und/oder Schlupf (ASR-System) überwacht.

5. Einrichtung an Fahrzeugen, welche Räder mit Luftreifen haben, zum Überwachen des Luftdrucks in den Reifen
mit einem Druckmeßfühler an jedem der zu überwachenden Räder (2),
mit einem beim jeweiligen Druckmeßfühler angeordneten Sender, welcher Signale die den vom Druckmeßfühler ermittelten Luftdruck beinhalten, aussendet
mit Antennen (7a, 8a) zum Empfangen dieser Signale, welche dem jeweiligen Rad (2) benachbart am Chassis des Fahrzeugs angebracht sind,
**dadurch gekennzeichnet**, daß eine dem jeweiligen Rad (2) zugeordnete, in seiner Nachbarschaft verlegte elektrische Leitung , welche zu einem Verbraucher, z.B. zu einer Leuchte, führt, als Antenne genutzt wird.

6. Einrichtung nach einem der vorstehenden Ansprüche, **dadurch gekennzeichnet,** daß die elektrische Leitung (5, 6; 7, 8) ein koaxiales Kabel ist, welches auf einem Teil seiner Länge in der Nachbarschaft des Rades (2) von seinem Außenleiter befreit ist.

7. Einrichtung nach einem der vorstehenden Ansprüche, **dadurch gekennzeichnet,** daß die Antennen mit einer gemeinsamen elektronischen Empfangs- und Auswerteschaltung (15) als Empfänger verbunden sind.

## Claims

1. A device on vehicles which have wheels having pneumatic tyres, for monitoring the air pressure in the tyres,
having a pressure sensor on each of the wheels (2) to be monitored,
having a transmitter which is arranged near to the respective pressure sensor and transmits signals which indicate the air pressure determined by the pressure sensor,
having antennae (7a, 8a) for receiving these signals, which are mounted on the chassis of the vehicle, adjacent to the respective wheel (2),
characterized in that each antenna (7a, 8a) uses a separate electrical line (7, 8) which belongs to a further monitoring device (4) associated with the same wheel (2).

2. A device on vehicles which have wheels having pneumatic tyres, for monitoring the air pressure in the tyres,
having a pressure sensor on each of the wheels (2) to be monitored, having a transmitter which is arranged near to the respective pressure sensor and transmits signals which indicate the air pressure determined by the pressure sensor,
having antennae (7a, 8a) for receiving these signals, which are mounted on the chassis of the vehicle, adjacent to the respective wheel (2),
characterized in that each antenna uses a sensor (4) which faces it and which belongs to a further monitoring device associated with the same wheel (2).

3. A device according to Claim 1 or 2, characterized in that the further monitoring device (4) monitors the brake-lining wear.

4. A device according to Claim 1 or 2, characterized in that the further monitoring device (4) monitors the wheels (2) for locking (ABS system) and/or slipping (ASR system).

5. A device on vehicles which have wheels having pneumatic tyres, for monitoring the air pressure in the tyres,
having a pressure sensor on each of the wheels (2) to be monitored,
having a transmitter which is arranged near to the respective pressure sensor and transmits signals which indicate the air pressure determined by the pressure sensor,
having antennae (7a, 8a) for receiving these signals, which are mounted on the chassis of the vehicle, adjacent to the respective wheel (2),
characterized in that an electrical line which is associated with the respective wheel (2), is laid in its vicinity and leads to a consumer, for example to a light, is used as an antenna.

6. A device according to one of the preceding claims, characterized in that the electrical line (5, 6; 7, 8) is a coaxial cable which, along part of its length in the vicinity of the wheel (2), is freed from its external conductor.

7. A device according to one of the preceding claims, characterized in that the antennae are connected to a common electronic receiving and evaluating circuit (15) in the form of a receiver.

## Revendications

1. Mécanisme monté sur des véhicules dont les roues sont équipées de bandages pneumatiques, pour surveiller la pression d'air régnant dans les pneumatiques, comprenant
un capteur de pression monté sur chacune des roues (2) à surveiller,
un émetteur attribué à chaque capteur de pression, qui génère des signaux qui renferment la pression d'air déterminée par le capteur de pression,
des antennes (7a, 8a) pour la réception de ces signaux, qui sont appliquées sur chaque roue (2) à proximité du châssis du véhicule,
caractérisé en ce que chaque antenne (7a, 8a) utilise un conducteur électrique propre qui fait partie d'un mécanisme de surveillance supplémentaire (4) attribué à la même roue (2).

2. Mécanisme monté sur des véhicules dont les roues sont équipées de bandages pneumatiques, pour surveiller la pression d'air régnant dans les pneumatiques, comprenant
un capteur de pression monté sur chacune des roues (2) à surveiller,
un émetteur attribué à chaque capteur de pression, qui génère des signaux qui renferment la pression d'air déterminée par le capteur de pression,
des antennes (7a, 8a) pour la réception de ces signaux, qui sont appliquées sur chaque roue (2) à proximité du châssis du véhicule,
caractérisé en ce que chaque antenne utilise un palpeur (4) orienté vers elle, qui fait partie d'un mécanisme de surveillance supplémentaire attribué à la même roue (2).

3. Mécanisme selon la revendication 1 ou 2, caractérisé en ce que le mécanisme de surveillance supplémentaire (4) surveille l'usure des garnitures de freins.

4. Mécanisme selon la revendication 1 ou 2, caractérisé en ce que le mécanisme de surveillance supplémentaire (4) surveille la roue (2) quant au blocage (système ABS) et/ou quant au patinage (système ASR).

5. Mécanisme monté sur des véhicules dont les roues sont équipées de bandages pneumatiques, pour surveiller la pression d'air régnant dans les pneumatiques, comprenant
un capteur de pression monté sur chacune des roues (2) à surveiller,
un émetteur attribué à chaque capteur de pression, qui génère des signaux qui renferment la pression d'air déterminée par le capteur de pression,
des antennes (7a, 8a) pour la réception de ces signaux, qui sont appliquées sur chaque roue (2) à proximité du châssis du véhicule,
caractérise en ce qu'on utilise à titre d'antenne un conducteur électrique attribué à la roue respective (2) posé à proximité de cette dernière, qui mène à un récepteur, par exemple à une lampe.

6. Mécanisme selon l'une quelconque des revendications précédentes, caractérisé en ce que le conducteur électrique (5, 6; 7, 8) est un câble coaxial qui est libéré, sur une partie de sa longueur à proximité de la roue (2), de son conducteur extérieur.

7. Mécanisme selon l'une quelconque des revendications précédentes, caractérisé en ce que les antennes sont reliées à un circuit électronique commun de réception et d'évaluation (15), à titre de récepteur.
